# EUROPEAN PATENT APPLICATION

(11) **EP 1 736 848 A1**
(43) Date of publication of application: **27.12.2006**
(21) Application number: 05727355.9
(22) Date of filing: 31.03.2005
(51) Int. Cl.: G06F 1/00, G06F 9/44, G06F 12/14, H04L 9/14

(54) **EXECUTION DEVICE**

(30) Priority: 02.04.2004 JP 2004109778
(71) Applicant: MATSUSHITA ELECTRIC INDUSTRIAL CO., LTD., Osaka 571-8501 (JP)
(72) Inventor: NAKAMURA, Tomonori Mat. Elec. Ind. Co., Ltd., Chuo-ku, Osaka 540-6319 (JP)
(74) Representative: Grünecker, Kinkeldey, Stockmair & Schwanhäusser Anwaltssozietät
(86) International application number: PCT/JP2005/006290
(87) International publication number: WO 2005/096120

(57) **Abstract**

An execution device executes an application program created in an object-oriented language. An application includes one or more classes that each have one or more methods, and confidentiality information that expresses whether or not confidentiality is necessary. The execution device determines whether or not encryption is necessary, with reference to the confidentiality information, and when the method is to be executed, records, in a memory, an object including data that the method manipulates. When it is determined that encryption is necessary, the object is recorded with the data encrypted.

## Description

### Technical Field

The present invention relates to a technique for preventing interception and modification of a program, and in particular to a technique for preventing interception and modification of a program when the program is executed.

### Background Art

In recent years, various kinds of application programs (hereinafter referred to as "applications") have come to be executed not only in personal computers, but also in other devices that have information processing functions, such as digital televisions and mobile telephones.
An application may be pre-installed in such a device, purchased and installed in the device by a user, or provided by a program distribution service. Applications provided by a program service provider include those that are downloaded via the Internet, and those that are transmitted multiplexed on a digital broadcast broadcasting wave.

In this way, currently devices that have a function capable of executing an application (hereinafter such a device is referred to as an "execution device") execute programs for a wide variety of uses and purposes.
However, such programs are the target of fraudulent acts such as the program being modified and data included in the program being stolen. Since these kinds of fraudulent acts are obstacles to the smooth implementation of program download services and the like, techniques are being developed to prevent programs from modification and the like.

One example is a technique that puts and encrypted program into a memory external to a CPU (central processing unit), and decrypts the encrypted program when it is read to the CPU (see Patent Document 1, FIG. 11). This method makes it extremely difficult to analyze theprogrambymethodssuchas, using a debugger or the like, referencing the memory, or tracing operations of the program by rewriting the contents of the memory. This greatly increases the ability to prevent the program being modified and the data being intercepted.
Patent Document 1: Japanese Patent Application Publication No. H02-297626

### Disclosure of the Invention

### Problem to be Solved by the Invention

However, a problem of reduced execution speed occurs when all programs put into the memory are encrypted, because decryption processing is performed each time a program is required by the CPU, and encryption processing is performed each time a program is written to the memory.
In view of this problem, an object of the present invention is to provide an execution device that is capable of preventing modification and interception of data that would be problematic if modified or intercepted, and also capable of execution programs at a speed that is not low enough to be a perceived as a problem by a user.

### Means for Solving the Problem

In order to solve the stated problem, the present invention is an execution device for executing an application program created in an object-oriented language, the application program including one or more classes that each have one or more methods, and confidentiality information that expresses whether or not confidentiality is necessary, the execution device including: an encryption determination unit operable to determine whether or not encryption is necessary, with reference to the confidentiality information; and an object recording unit operable to, when the method is to be executed, record, in a memory, an object including data that the method manipulates, wherein, when the encryption determination unit determines that encryption is necessary, the object recording unit records the object with the data encrypted.

### Effects of the Invention

The execution device of the present invention is able to encrypt only the data recorded in the main memory, while executing the application. Therefore, the execution device of the present invention is able to reduce the processing time required for encryption and the like, and make interception and modification of data handled by the application difficult.
Specifically, a program is usually composed of an instruction part and a data part, and therefore if it is the data part that is to be protected, it is sufficient to encrypt only the data. As a result, processing time for encryption and decryption when accessing the instruction part is unnecessary, and therefore the application to be protected can be protected as a whole, while the processing time is kept to a minimum.

Here, the confidentiality shown by the confidentiality information may be with respect to units of entire applications, class units, methods units, field units, or other units.
Furthermore, the confidentiality information may further include information showing a level of confidentiality, the execution device may further include an encryption method determination unit operable to, with reference to the confidentiality information, determine an encryption method, and when the encryption determination unit judges that encryption is necessary, the object recording unit may record the object with the data encrypted according to the determined encryption method.

According to this structure, the execution device can change the encryption algorithm according to the level of confidentiality of the application, and therefore the encryption method can be determined in consideration of the importance of the application and the execution speed of the application.
Here, the confidentiality information is not limited being information showing not whether or not encryption is necessary, but may, for instance, show a level of protection, what kind of algorithm to use, or how long an encryption key is to be used.

Furthermore, when overwriting the data included in the object using other data, if the data included in the object is encrypted, the other data may be recorded encrypted.
Furthermore, the object recorded in the memory may include information showing whether or not the data in the obj ect is encrypted, and when the information shows that data in the object is encrypted, the data may be recorded encrypted.

According this structure, data can also be overwritten with encrypted data, and therefore data can be protected during execution of the application.
Furthermore, the execution device may further include a data judgment unit operable to judge whether or not the data is data necessary for specifying an address location of other data, wherein when the data judgment unit judges that the data is data necessary for specifying an address location of other data, encryption is suppressed.

According to the stated structure, it is unnecessary to encrypted reference-type data among the encrypted data. This suppresses reduction in processing speed in garbage collection.
Specifically, if reference-destination data is encrypted, without the reference-type data itself being encrypted, the object of protecting data can be achieved. Furthermore, when reference-type data is rewritten during garbage collection, the processing speed can be increased because processing for encryption and decryption is unnecessary.

Furthermore, the present invention is an execution device for executing a program, the program including data and confidentiality information showing whether or not confidentiality is necessary, the execution device including: an encryption determination unit operable to judge whether or not encryption is necessary, with reference to the confidentiality information; and a load unit operable to load the data to a mainmemory when an executable program is executed,
wherein, when the encryption determination unit judges that encryption is necessary, the load unit encrypts the data and loads the encrypted data.

With the above structure, the execution device of the present invention can load only the data part that needs to be encrypted to the main memory during program execution. This reduces the processing time necessary for encryption and the like, and makes interception and modification of the data handled by the program difficult.

### Brief Description of the Drawings

FIG. 1 shows the structure of an execution device of the present invention;
FIG. 2 is a function block diagram showing the structure of a virtual machine 2000;
FIG. 3 shows an example of the structure and contents of encryption strength information 2810;
FIG. 4 shows an example of the structure and contents of an application contained in an application file 1000;
FIG. 5 shows an example of the structure and contents of class information 1210 generated in a method area 2600 by a loader 2200;
FIG. 6 shows an example of the structure and contents of encryption algorithm information 2820;
FIG. 7A shows an example of the structure of an object 2510;
FIG. 7B shows an example of the contents of the object 2510;
FIG. 8 is a flowchart showing processing of an execution device 3000;
FIG. 9 is a flowchart showing application registration processing;
FIG. 10 is a flowchart showing object generation processing; and
FIG. 11 shows the structure of prior art.

### Description of Numerical References

- 1000: application file
- 1200: application class
- 1210: class information
- 1300: data file
- 1400: metadata
- 1400: meta information
- 1410: run class name
- 1420: security strength information
- 1610: corresponding processing information
- 2000: virtual machine
- 2100: application registration unit
- 2110: encryption determination unit
- 2200: loader
- 2210: class loader
- 2220: verifier
- 2230: JIT complier
- 2300: interpreter
- 2310: decryption unit
- 2320: encryption unit
- 2400: heap management unit
- 2500: heap area
- 2510: object
- 2600: method area
- 2700: native class library
- 2800: encryption information storage unit
- 2810: encryption strength information
- 2820: encryption algorithm information
- 3000: execution device
- 3100: application
- 3200: application control unit
- 3210: application acquiring program
- 3300: OS
- 3400: CPU
- 3500: ROM
- 3600: RAM

### Best Mode for Carrying Out the Invention

### Overview

The execution device of the present invention is structured with a focus on the following points: security requirements are different for different applications executed by the execution device due to differing uses and purposes of applications; and, rather than the application itself, it is often data used by the application that is highly confidential.

Here, security requirements being different refers to data to be protected differing depending on the application, and the level of confidentiality differing depending on the application.
Specifically, when executing an application whose data does not need to be confidential, it is preferable to reduce the amount of encryption and decryption processing as much as possible, due to the fact that they contribute to lowered execution speed. Furthermore, when executing an application that deals with data that is extremely highly confidential, it is preferable to protect the data using an encryption algorithm that is as strong as possible, even if this lowers the execution speed to some extent.

A feature of the present invention is that the level of encryption can be freely changed depending on the importance of the data handled by the application.
The level of confidentiality of the data handled by the application may only be known to a creator of the application or a user of the application at the time of creating the application.
Therefore, the execution device of the present invention has a function whereby a program that directly accesses data specifies the application that generated the data.

In other words, by specifying the application that generated the data, it is possible to identify whether or not the data was generated by a program that deals with highly confidential data, and therefore it is possible to encrypt only data that is highly confidential.
As a result, it can be said that the execution device keeps the lowering of execution time due to encryption to a minimum, and also has a data protection function that prevents interception of data.

In addition, the present invention is capable of selecting the strength of encryption, a key, and so on, according to the level of confidentiality needed for the application.
The following describes an execution device relating to an embodiment of the present invention.
The present embodiment describes a case of a Java application that operates on a Java virtual platform.

### Structure

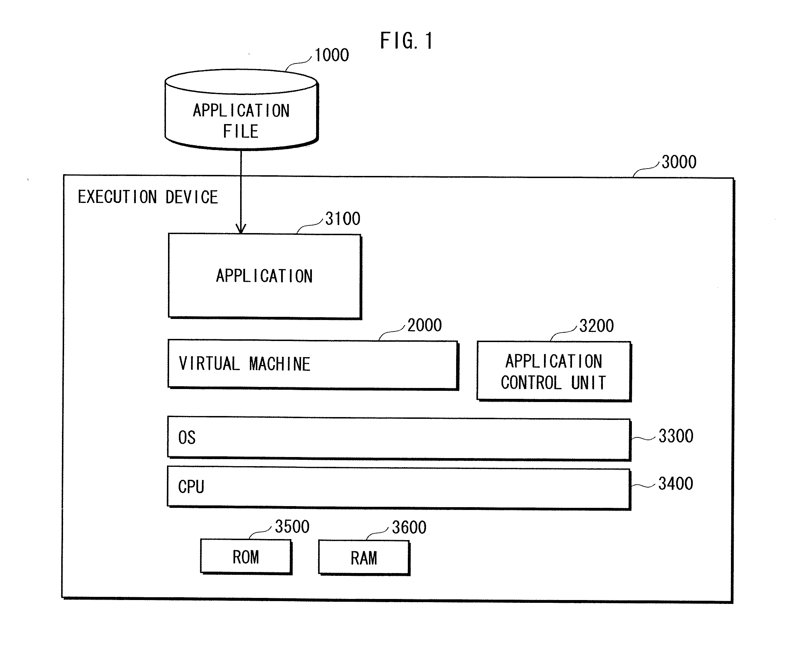

FIG. 1 illustrates the structure of an execution device of the present invention.
The execution device 3000 is composed of an application 3100, a virtual machine 2000, an application control unit 3200, an OS (operating system) 3300, a CPU (central processing unit) 3400, a ROM (read only memory) 3500, and a RAM (random access memory) 3600.

The execution device 3000, in addition to a function of executing applications, has various other device-specific functions (not illustrated). The execution device 3000 can be applied to a range of electronic devices that have a Java (TM, hereinafter also) virtual machine, such as digital televisions, set top boxes, DVD recorders, Blu-Ray Disc (BD) recorders, car navigation terminals, mobile telephones, and PDAs.

The function for executing applications in the execution device 3000 is similar to that of software execution means included in general personal computers, digital household appliances, and the like. If, for instance, the execution device 3000 was a digital television, the execution device 3000 would have a function of executing an application for converting received digital data into images and displaying the images.
The application 3100 is an application that is executed by the execution device 3000, and has been downloaded from an application file 1000 that is external to the execution device 3000. Here, it is assumed that the application file 1000 contains an encrypted Java application.

The virtual machine 2000 is a Java virtual machine that successively interprets and executes a program written in Java language. In other words, the virtual machine 2000, which is a software program, simulates a virtual CPU, and interprets and executes Java instruction codes.
The virtual machine in the present embodiment is assumed to have a function called a JIT compiler. This JIT compiler compiles bytecode into an execution format that is comprehensible to the CPU 3400.

In other words, a source program written in Java language is converted into byte code by a bytecode compiler. This bytecode is intermediate code that does not depend on hardware. Here it is assumed that the bytecode is in the application file 1000.
The virtual machine of the present embodiment reads the bytecode, and loads, into a memory, the bytecode that has been compiled into the execution format by the JIT complier.

Note that a Java virtual machine may have any of various structures, such a structure that includes a processor capable of directly executing part or all of the bytecode, and an interpreter that executes bytecode that the processor is incapable of executing directly. (See "Java Language Specification" (ISBN 0-201-63451-1), etc.)
The application control unit 3200 has functions of executing and controlling processing necessary for execution of an application, this processing including downloading the application 3100 and running the virtual machine 2000.

The OS 3300 is a general name for technology composed of a kernel for executing other sub-programs in parallel and a library, and is, for instance, Linux. The OS 3300 executes the virtual machine 2000 as a sub-program.
The CPU 3400 has a function of executing the virtual machine 2000, the OS 3300, the application 3100, and so on.

The RAM 3600 is composed of a primary storage memory such as an SRAM (static random access memory) or a DRAM (dynamic random access memory). The RAM 3600 is used to store data temporarily when the CPU 3400 executes processing.
The ROM 3500 is composed of a non-volatile memory such as a flash memory or a hard disk, and is for storing data, programs and the like as instructed by the CPU 3400.

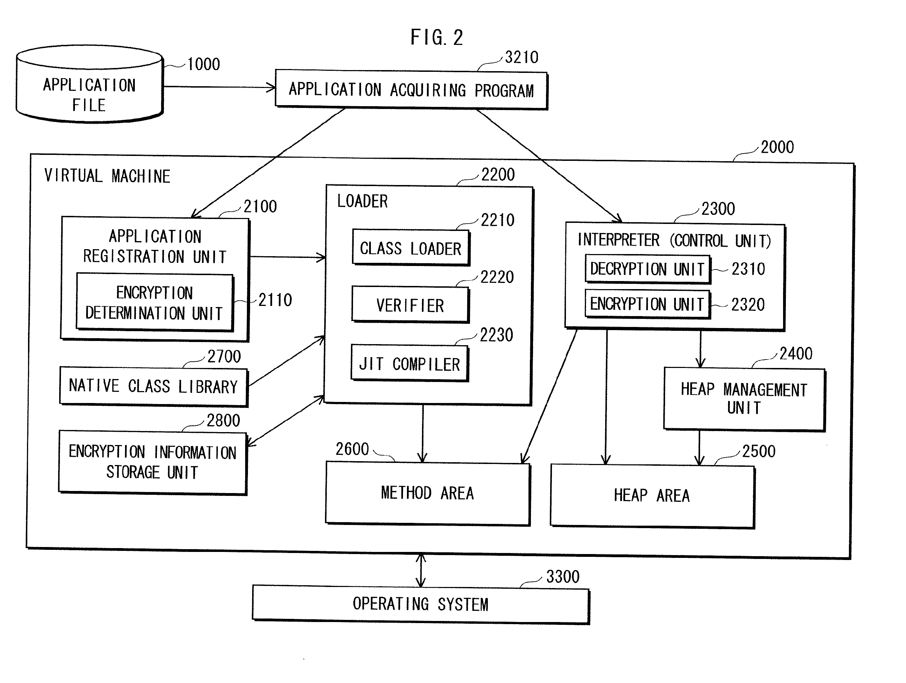

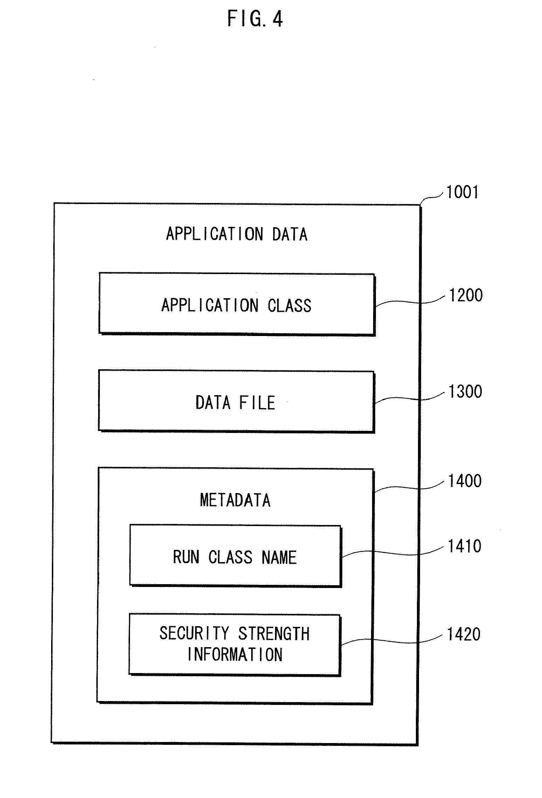

FIG. 2 is a function block diagram showing the structure of the virtual machine 2000.
The virtual machine 2000 is composed of an application registration unit 2100, a loader 2200, an interpreter 2300, a heap management unit 2400, a heap area 2500, a method area 2600, a native class library 2700, and an encryption information storage unit 2800.
An application acquiring program 3210, which is one of programs of the application control unit 3200 and is written in Java language, has a function of downloading applications from the application file 1000. Details of downloaded applications are given below with reference to FIG. 4.

The following describes the function units of the virtual machine 2000.
The application registration unit 2100 has a function of receiving a request to register an application from the application acquiring program 3210, determining whether or not the application needs encrypting, and if so, determining an encryption method and the like, and has the determined method and the like stored in the encryption information storage unit 2800. The application registration unit 2100 also has a function of creating a class loader object for the application of which registration has been requested.

The application registration unit 2100 has an encryption determination unit 2110 which makes a determination of whether or not an application acquired by the application acquiring program 3210 needs encrypting, and also determines whether the level of encryption need can be realized by the execution device 3000.
If the encryption determination unit 2110 determines that encryption of the application is possible, the application registration unit 2100 determines an encryption algorithm and encryption key for encrypting data that the application generates, and has the determined encryption algorithm and encryption key stored in correspondence in the encryption information storage unit 2800.

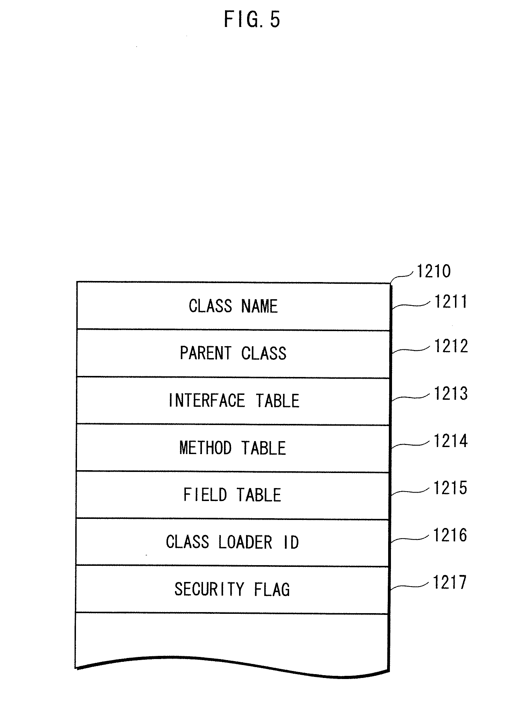

The loader 2200 has a function of loading class files from the application file 1000, the native file library 2700 and the like to the method area 2600. Class files are described below with reference to FIG. 5.
The loader 2200 has a class loader 2210, a verifier 2220, and a JIT complier 2230.

The class loader 2210 has a function of reading and loading class files from the application file 1000, and a function of unloading classes. Unloading classes is a function of removing classes whose execution has ended and are no longer required from the virtual machine 2000.
The verifier 2220 has a function of determining defects in the data format of classes, and determining the safeness of bytecode in classes. The loader 2200 does not load classes that are determined by the verifier 2200 to be unsafe.

The JIT compiler 2230 has a function of compiling bytecode into an execution format that is comprehensible to the CPU 3400.
The interpreter 2300 has a function of interpreting and executing bytecode loaded by the loader 2200, and performs core processing in the Java virtual machine.
The interpreter 2300 has a decryption unit 2310 which has a function of, if data that is read from the heap area 2500 is encrypted, decrypting the data before it is processed. The interpreter also has an encryption unit 2320 which has a function of, if data that is to be stored in the heap area 2500 is to be encrypted, encrypting the data before it is written to the heap area 2500.

The heap management unit 2400 has a function of, under the control of the interpreter 2300, creating objects in and deleting objects from the heap area.
The heap management unit 2400 also has a function of performing garbage collection. Garbage collection is a function of freeing areas of the working memory that are no longer required in execution of an application, to make the areas re-usable for other uses.

Here, the heap area 2500 is a memory in which objects are created, and the method area 2600 is a memory to which class files are loaded. These are created in the RAM 3600.
The native class library 2700 is a library that is called by Java applications, and provides, to the Java applications, functions provided by the OS 3300 and the hardware, sub-programs and the like included in the execution device 3000.

The encryption information storage unit 2800 has a function of storing information necessary for encryption, and is created in the RAM 3600.
The execution device 3000 is also assumed to include other features of a general Java virtual machine, such as a function unit for managing threads, and a stack area (not illustrated).
Note that the functions of the execution device 3000 are realized by the CPU executing programs stored in the memory or the hard disk of the execution device 3000.

### Data

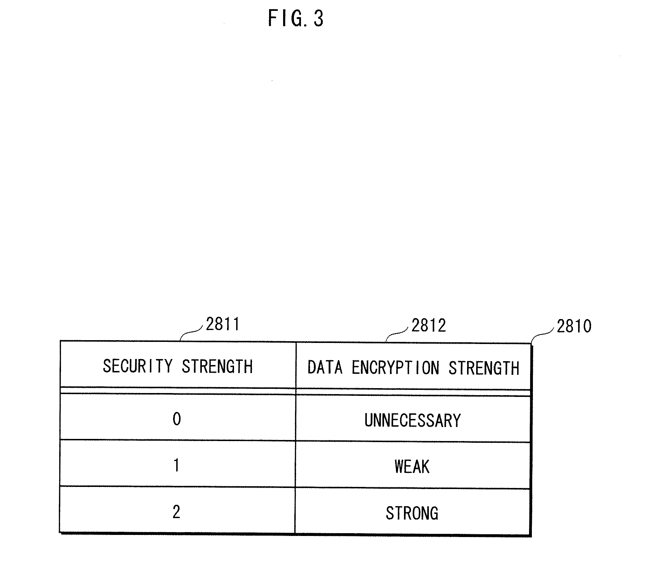

The following describes the main data used in the execution device, with reference to FIGs. 3 to 6.
FIG. 3 shows an example of the structure and contents of encryption strength information 2810.
This encryption strength information 2810 is stored in the encrypted information storage 2800.

The encryption strength information 2810 is composed of security strength 2811 and data encryption strength 1812.
The security strength 2811 shows the height of security of data handled by an application, the present example being one of three levels of security: "0" through to "2". One of these values "0" through to "3" is designated for each application.

The data encryption strength 1812 expresses the level of encryption in data is encrypted. For instance, if the value shown in the security strength 2811 is "0", the data encryption strength 2812 shows that encryption is "unnecessary". A value of "1" or greater in the security strength 2811 means that encryption of data is necessary. A value of "2" or greater in the security strength 2811 means that it is necessary to encrypt the data with either a stronger encryption algorithm or longer key than that used in the case of the security strength 2811 showing "1".

FIG. 4 shows an example of the structure and contents of an application contained in the application file 1000.
An application 1001 includes an application class 1200, a data file 1300, and metadata 1400.
The application class 1200 is a collection of one or more class files that compose an application.

The data file 1300 is data used when executing an application, and is, specifically, an image file, a sound file, or the like.
The metadata 1400 contains various information relating to the application 1001, examples of which being a run class name 1410, and security strength information 1420.

The run class name 1410 is the name of the class among the application classes 1200 that is to be executed first.
The security strength information 1420 expresses the level of security required from the virtual machine 2000 when executing the application class 1200. The information expressed by this security strength information 1420 is the same as the security strength 2811 in the encryption strength information 2810.

The level of security shown in the security strength information 1420 is, for instance, designated by being set as an option in a bytecode compiler.
FIG. 5 shows an example of the structure and contents of class information 1210 generated in the method area 2600 by the loader 2200.
The class information 1210 is composed of a class name 1211, a parent class 1212, an interface table 1213, a method table 1214, a field table 1215, a class load ID 1216, a secure flag 1217, and so on.

The class name 1211 is the name of the class.
The parent class 1212 is a reference to an internal format showing the parent class of the class.
Here, "reference" means an expression indicating the data entity of a pointer, an index, or the like.
The interface table 1213 is a reference to an interface that the class implements.

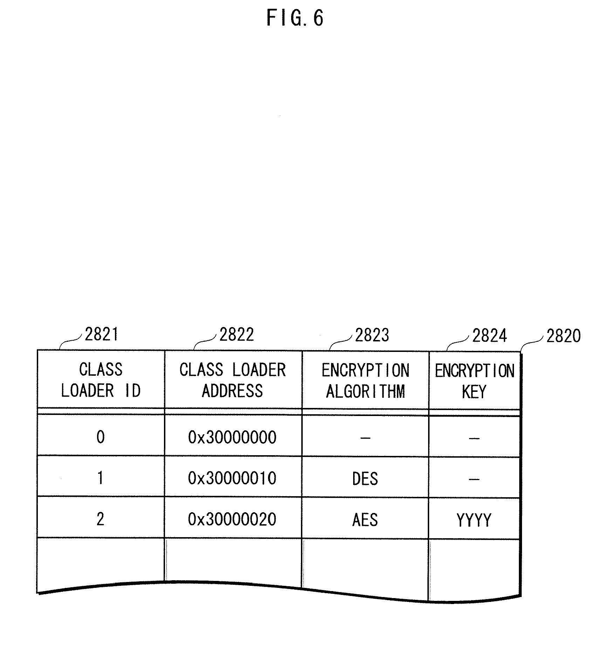

The method table 1214 is a list of methods in the class.
The field table 1215 is a list of fields in the class.
The class loader ID 1216 expresses a class loader object that the class has loaded, and contains a class loader ID 2821 (see FIG. 6.
The secure flag 1217 shows whether or not the class is a secure class.

Here, a secure class is a class that is included in an application class 1200 of the application 1001 whose security strength 2811 in the security strength information 1420 has a value of "1" or "2".
If the secure flag 1217 is set to "ON", the data handled by this class is judged to need encrypting.

The secure flag 1217 is set by the loader 2200 when the class is loaded. In the present embodiment, it is assumed that the secure flags 1217 of the classes are set uniformly according to the security strength information 1420 in the application 1001. Specifically, the secure flag 1217 is set to "ON" for all classes in an application that needs encrypting.

FIG. 6 shows an example of the structure and contents of encryption algorithm information 2820.
The encryption algorithm information 2820 is stored in the encryption information storage unit 2800, and is created by the application registration unit 2100.
The encryption algorithm information 2820 is composed of class loader ID 2821, class loader address 2822, and encryption algorithm 2823, and an encryption key 2824.

Each class loader ID 2821 shows an identifier that the application registration unit 2100 has allocated uniquely to the class loader. In other words, one class loader 2210 exists per application. In the present embodiment, identifiers are allocated to the class loaders 2210 in ascending order starting from "0".
Each class loader address 2822 shows an address of a class loader object of which registration has been requested by the virtual machine 2000.

The present example expresses that data generated due to execution of an application loaded by a class loader having a class ID "0" is not encrypted, and that data generated due to execution of an application loaded by a class loader having a class ID "2" is encrypted with an AES (advanced encryption standard) algorithm and the key therefor is "YYYY".

### Operations

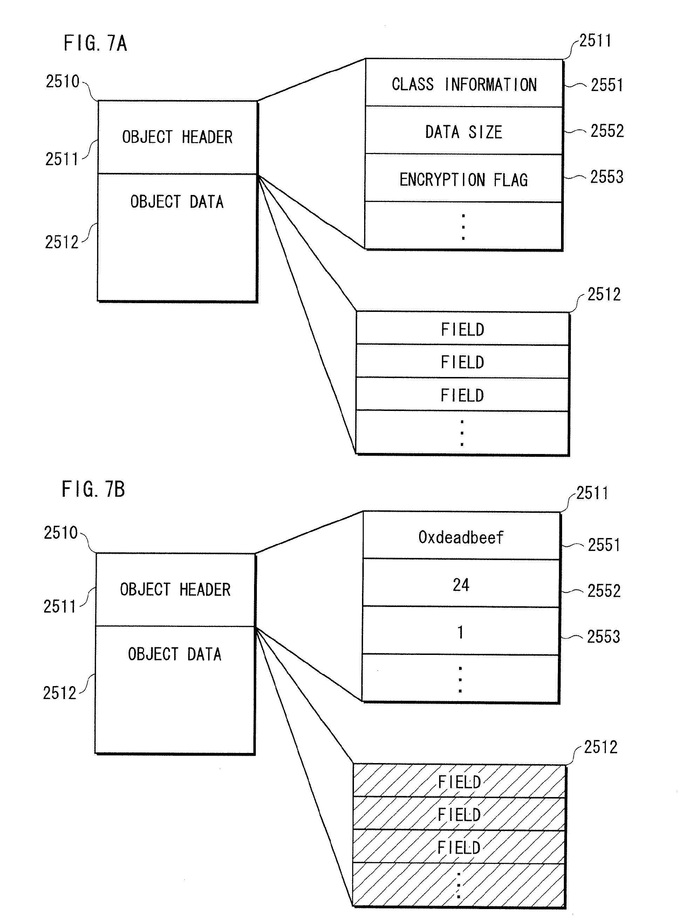

The following describes the operations of the execution device 3000, with reference to FIGs. 7A and 7B to FIG. 10.
FIG. 7A shows an example of the structure of an object 2510 which is referred to as necessary in the following description of operations. FIGs. 7A and 7B are first described.
The object 2510 is created in the heap area 2500 when a method in a class is executed.

The object 2510 is composed of an object header 2511 and object data 2512. The object header 2511 includes class information 2551 pertaining to the class to which the object belongs, a data size 2552 that shows the size of the object data 2512, and an encryption flag 2553 that shows whether or not the object data 2512 is encrypted. The encryption flag 2553 being set to "ON" indicates that the object data 2512 is encrypted.

The encryption flag 2553 is set to "ON" if the secure flag 1217 of the class to which the method belongs, in other words the class referred to in the class information 2551, is set to "ON".
The class information 2551 is an address of an internal expression of a class generated in the method area 2600 by a class loader. The first address in the class information 1210 (see FIG. 5) is set in the class information 2551.

This object data 2512 is runtime data generated as a result of the Java application running. The object data 2512 has at least 0 fields, the number of fields being determined uniquely according to the class to which the object belongs.
Each field is one of two types: a so-called basic-type field that handles numeric values, text and the like, and a reference-type field that expresses a reference to another object. In the present embodiment, encryption is assumed to be performed with respect to the entire object data 2512.

FIG. 7B shows an example of the contents of the object 2510.
For instance, the class information 2551 refers to an internal expression at an address "0xdeadbeef", and data size 2552 of the object data is "24". The value of an encryption flag 2553 is "1 (ON)", expressing that the object is encrypted.

By referring to the class loader 1216 (FIG. 5) from the internal expression in the address "0xdeadbeef", the class loader object that loaded this class can be specified. If the class loader ID 1216 that is the ID of this class loader object has the value "2", the encryption algorithm information 2820 (see FIG. 6) can be searched for based on the class loader ID 1216 having the value "2". Since the class loader ID 2821 in the encryption algorithm information 2820 has the value "2", it is known that the corresponding object data 2512 has been encrypted with an AES algorithm using the key "YYYY".

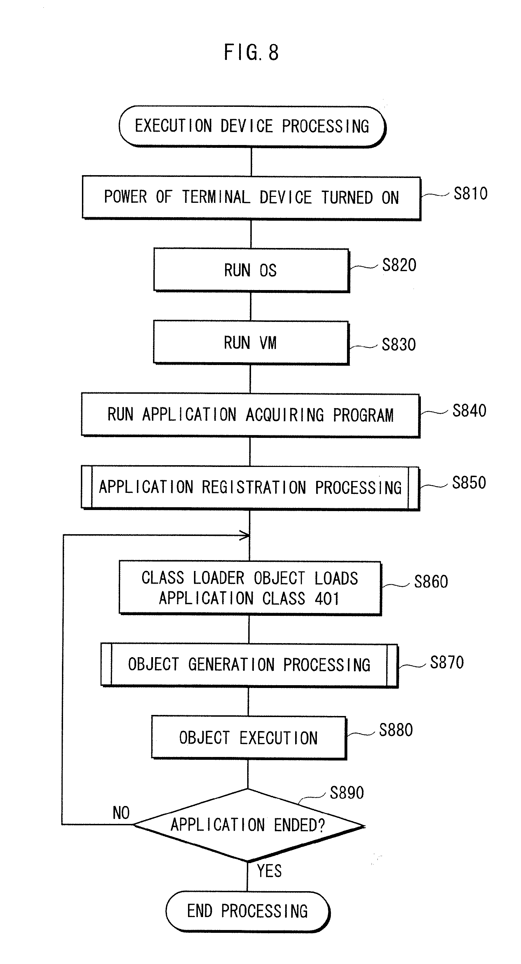

The actual encryption is performed by the encryption unit 2320 of the interpreter 2300, the actual decryption is performed by the decryption unit 2310 of the interpreter 2300.
The following describes the processing of the execution device, with reference to FIGs. 8 to 10.
In the present embodiment, is it assumed that a predetermined application is executed upon the power of the execution device being turned on.

FIG. 8 is a flowchart expressing the processing of the execution device 3000.
First, a user turns the power of the execution device 3000 on (step S810).
Having been powered, the CPU 3400 runs the OS 3300 (step S820).
Having started running, the OS 3300 runs the virtual machine 2000 (step S830), and instructs the virtual machine 2000 to run the application acquiring program 3210.

Having received the instruction, the virtual machine 2000 runs the application acquiring program 3210 (step S840).
The application acquiring program 3210 run by the virtual machine 2000 reads the application 1001 from the application file, and issues a request to the application registration unit 2100 to perform processing to register the application. Here, the application acquiring program 3210 reads only the metadata 1400 (see FIG. 4) of the application 1001, and passes the metadata 1400 to the application registration unit 2100. The application class 1200 and the data file 1300 are read as necessary during execution of the application.

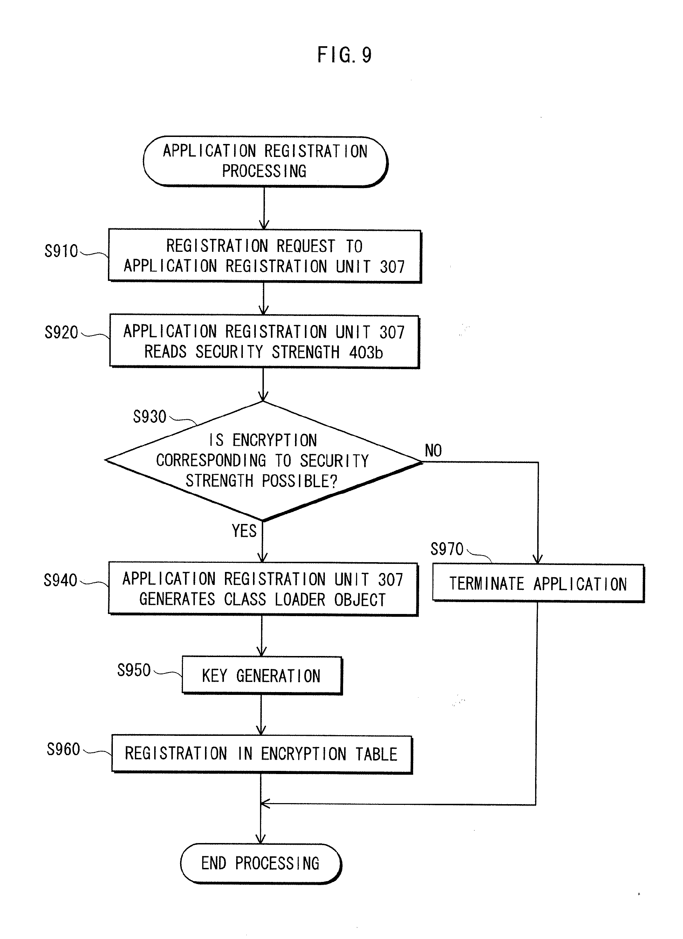

In the application registration processing, the level of confidentiality of the application 1001 is determined, and the algorithm and the like for encryption are determined. In addition, a class loader object for the application 1001 is generated (step S850). Specifically, as a result of the application registration processing, information regarding the encryption of the application in question is registered in the encryption algorithm information 2820 shown in FIG. 6. Details of the application registration processing are given later with reference to FIG. 9.

Having completed the application registration processing, the application registration unit 2100 notifies the application acquiring program 3210 to this effect. The application acquiring program 3210 receives the notification that the application registration processing has finished, notifies the interpreter 2300 of the run class name 1410, and requests loading.
The interpreter 2300 instructs the class loader object to load the class (hereinafter referred to as the "run class") specified by the run class name 1410 (see FIG. 4). The class loader object loads the specified class to the method area 2600 (step S860). At this point, the class information 1210 shown in FIG. 5 has been created in the method area 2600, and the class loader ID 1216 and the secure flag 1217 have been set.

Here, authenticity of the class is checked by the verifier 2220, and the class is converted to native code by the JIT compiler 2230.
At this point, the application has been loaded to the virtual machine 2000, and is in an execution format.
When the class loader object has finished loading the run class, the interpreter 2300 runs the application by executing the method of the run class.

Specifically, executing the method involves requesting the heap management unit 2400 to create an object in the heap area 2500 (step S870), and executing the method (step S880).
When a new method is executed, classes belonging to the method are loaded as required (step S860), and objects are created (step S870), to execute the method.

When the object has been created in the heap area 2500, the object data 2512 is encrypted if encryption is necessary, and the encryption flag is set.
Therefore, when a field in this object is accessed, the encryption flag 2553 of the object header 2511 is referred to, and if the encryption flag 2553 is set to "ON", object data is subjected to decryption processing if being read, or encrypted data is subjected to decryption if written. If the encryption flag 2553 is set to "OFF", the field is accessed without performing decryption or encryption. The encryption algorithm and the like are acquired as described with reference to FIG. 7B.

Before any of the function units of the virtual machine 2000 perform read operations with respect to an object, the encryption flag 2553 in the object header 2511 is detected, and if the object is encrypted, the object is then decrypted by the decryption unit 2310 and read. Furthermore, before any of the function units of the virtual machine 2000 perform write operations with respect to an obj ect, the encryption flag 2553 in the obj ect header 2511 is detected, and if the object is encrypted, the encrypted data is written to the encryption unit 2320.

### 1. Application registration processing

The following description is given with reference to FIG. 9.
FIG. 9 is a flowchart showing application registration processing.
The application acquisition program 3210 that runs the virtual machine 2000 reads the application 1001 from the application file, and makes a request to the application registration unit 2100 to perform registration processing with respect to the application (step S910).

Having been requested to perform registration processing, the application request unit 307 reads the security strength information 1420 (see FIG. 4) included in the application for which registration has been requested (step S920). Here, if the application is encrypted, the application is decrypted before the security strength information 1420 is read.
Next, a determination is made as whether or not the execution device 3000 has an encryption function corresponding to the read security strength information 1420 (step S930). This determination is made by the encryption determination unit 2110 in response to a request to do so.

More specifically, assuming that the security strength information 1420 is set to "2", the encryption determination unit 2110 reads the encryption strength information 2810 from the encryption information storage unit 2800, and reads that the data encryption strength 2812 corresponding to the security strength 2811 that is set to "2" is set to "strong".
If the execution device 3000 supports the encryption method corresponding to the data encryption strength 2812 set to "strong", the encryption determination unit 2110 judges that the execution device 3000 has the encryption function corresponding to the read security strength information 1420. Note that it is assumed that levels of encryption supported in the execution device are determined in advance, and stored in the application registration unit 2100.

If the encryption determination unit 2110 judges that the execution device 3000 has the encryption function corresponding to the read security strength information 1420 (step S930: YES), the application registration unit 2100 generates a class loader object for loading the application (step S940).
Next, the encryption algorithm and the length of the key are determined according to the read security strength information 1420, and the encryption key is generated (step S950). An encryption key is generated randomly each time an application is registered, even for the same application, in order to make deciphering more difficult. Furthermore, a stronger encryption algorithm or key than those specified by the security strength information 1420 may be used.

The application registration unit 2100 registers the class loader ID 2821, the address 2822 of the class loader object, the encryption algorithm 2823, and the encryption key 2824 in correspondence in the encryption algorithm information 2820 (step S960).
If the execution device 3000 does not have the encryption function corresponding to the security strength information 1420, the application is terminated (step S970). By not running the application, the confidentiality of the application is protected.

### 2. Object generation processing

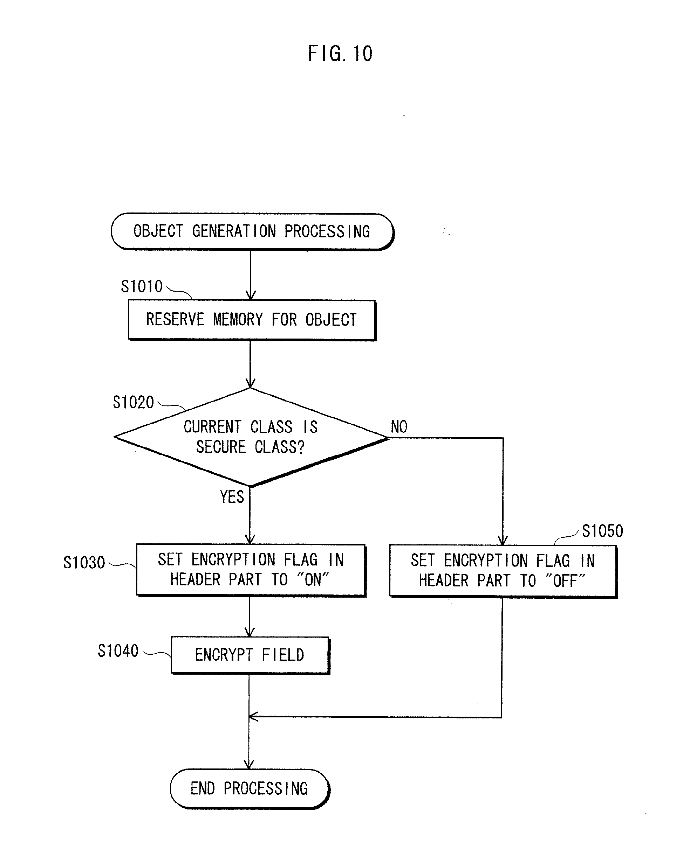

The following description is given with reference to FIG. 10. FIG. 10 is a flowchart showing object generation processing.
When loading of a run class by a class load object is complete (see FIG. 8, step S860), the interpreter 2300 runs the application by executing the method of the run class.

Executing a method involves first making a request to the heap management unit 2400 to create an object.
The heapmanagement unit 2400 receives the request, and reserves memory area for the new object (step S1010).
Next, the interpreter 2300 detects whether or not the current class is a secure class. This is determined by checking the secure flag 1217 of the current class. If current flag is set to "ON", the current class is determined to be a secure class, in other words a class that needs encryption.

If the current class is determined to be a secure class (step S1020: YES), the encryption flag in the object header 2511 is set to "1", indicating that the object is encrypted (step S1040).
After the flag is set, the object data 2512 is encrypted (step S1040). Here, the encryption algorithm information 2820 (see FIG. 6) is read in order to determine the encryption method.

If the current class is determined not to be a secure class (step S1020: NO), the encryption flag in the object header 2511 is set to "0", indicating that the object is not encrypted (step S1050).
Here, the current class is the class that defines the method being executed.
The interpreter 2300 creates a data structure called a Java frame in the RAM 3600 when executing a Java method. One Java frame is generated each time a Java method is called, and is destroyed when execution of the method ends. Although the interpreter 2300 is executed by a plurality of threads, only one active Java frame exists with respect to the method being executed in an arbitrary point of a thread having control rights. This frame is called the current frame, and the method being executed in the frame is called the current method. The class that defines the current method is called a current class.

In other words, there is one current class at any one instant.

### Supplementary Remarks

Although the execution device of the present invention has been described based on a preferred embodiment, the execution device may be partially altered, and the present invention is not limited to the described preferred embodiment.
(1) Although in the preferred embodiment applications executed by the execution device 3000 are downloaded by the application acquiring program 3210 from the external application file 1000, applications may instead be downloaded from a server on the Internet.

In this case, the application acquisition program 3210 is a program that has a function of downloading Java applications according to a protocol such as TLS (transport layer security) and HTTP (hypertext transfer protocol).
TLS is a data transfer method that prevents interception and modification of data during communication by using encryption (see RFC 2246). HTTP is a data transfer method generally used for data communication on the Internet.

Note that RFC (request for comments) is a public document by the IETF (Internet Engineering Task Force) for standardizing techniques used on the Internet, and outlines various techniques such as protocols that are used.
Furthermore, the applications executed by the execution device 3000 may be Java applications embedded in an MPEG (Moving Picture Coding Experts Group) 2 transport stream as a data broadcast in digital broadcasting.

Inthiscase, the application acquiring program 3210 is a program that reads Java applications embedded in transport streams to the execution device 3000.
One possible method of embedding a Java program in an MPEG 2 transport stream is a DSMCC method. A DSMCC method is a method by which a file system composed of directories and files used in a computer is encoded in packets in an MPEG 2 transport stream (see MPEG Standard ISO/IEC 138181-1 and MPEG standard ISO/IEC 138181-6) .

The applications executed by the execution device 3000 may be Java applications recorded on an SD card (secure digital memory card), a CD-ROM (compact disk read only memory), a DVD (digital versatile disk), a Blu-Ray Disc, or the like.
Inthiscase, the application acquiring program 3210 is a program for reading the applications from such a recording medium.

Furthermore, the applications executed by the execution device 3000 may be Java applications recorded in the ROM 3500 in the execution device 3000.
In this case, the application acquiringprogram 3210 is a program for reading Java applications from the ROM 3500 to the RAM 3600.
(2) Although the application acquiring program 3210 and the like are Java programs written in Java language in the present embodiment, these may be realized by other means having equivalent functions, examples of which are programs written in native language, and hardware.

Furthermore, the applications executed in the Java virtual machine are not limited to being written in Java language, but may be written in another object oriented language such as C++.
(3) The levels of the security strength 2811 are not limited to the three levels "0" to "2" used in the present embodiment.

For instance, four or more security strengths may be set, or there may be two security levels respectively indicating that encryption is necessary and not necessary.
(4) Although the metadata 1400 of the application 1001 includes the run class name 1410 and the security strength information 1420 in the present embodiment, the metadata 1400 may include other data.

Furthermore, instead of the security strength being specified in the metadata 1400, the encryption algorithm, the length of the key, or the like may be specified in the metadata 1400.
Note that it is not imperative for the application 1001 to include metadata 1400. In such a case, the encryption determination unit 2110 may be structured to treat the application as having security strength information set to "0", or treat the application as having the highest level of security strength handled by the execution device 3000.
(5) Although the application 1001 is structured as one file in the present embodiment, the application class 1200, the data file 1300, and the metadata 1400 may be separate files. Alternatively, the metadata 1400 may be embedded in the application class 1200.
(6) Although the secure flags 1217 are determined uniformly for the classes according to the security strength information 1420 in the preferred embodiment, the secure flags 1217 may be determined individually for each class.

As one example, the secure flag 1217 of classes that need encryption is set to "ON", and the secure flag 1217 of classes that do not need encryption is set to "OFF". Furthermore, it is possible to set the security strength information 1420 individually for each class.
(7) Although the entire object data 2512 is encrypted in the present embodiment, instead the fields may be individually encrypted.

Furthermore, in this encryption of the fields, it is possible to encrypt only the basic-type fields, and not the reference-type fields. In this case, if the reference-type fields are unable to be identified, it is necessary for each field to have a flag showing whether or not the field is encrypted.
This means that garbage collection by the heap management unit 2400, which requires access to numerous reference-type fields, can be performed with high speed.
(8) A program for causing a CPU to execute the control processes for realizing the functions of the execution device shown in the preferred embodiment (see FIG. 2, for example) may be distributed by being recorded on a recording medium or via various types of communication paths. Examples of the recording medium include an IC card, an optical disc, a flexible disk, a ROM, and a flash memory. The distributed program is provided for use stored in a memory or the like that is readable by a CPU in a device, and the functions of the execution device of the preferred embodiment are achieved by the CPU executing the program.

### Description of Background Art

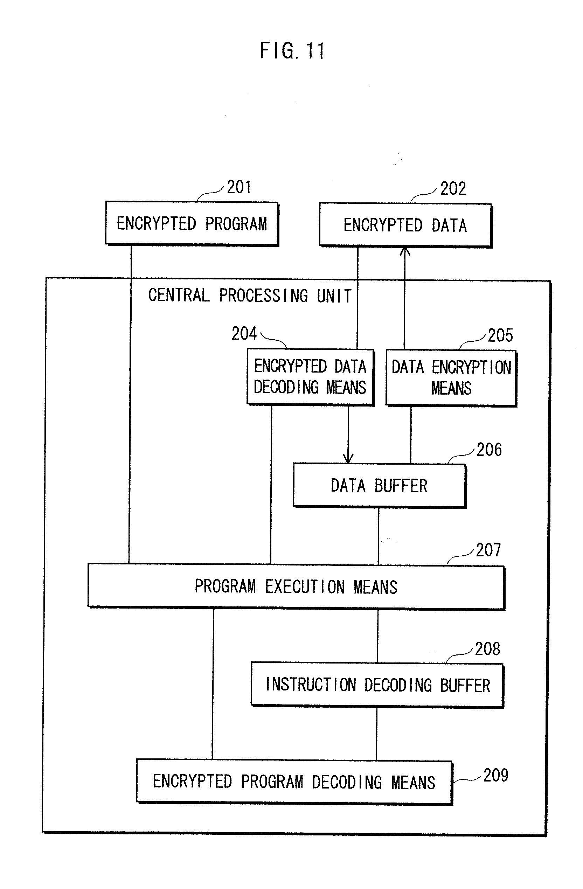

As shown in FIG. 11, a computer that has a conventional data protection function includes a central processing unit 203 that has encrypted data decoding means 204 that performs data decryption processing, data encryption means 205 that performs data encryption processing, a data buffer 206, and program execution means 207. Encrypted data 202 which is stored outside the central processing unit 203 is read to the central processing unit 203 at which time it is decrypted, and then after being processed by the program execution means 207, is encrypted by the data encryption means 205, and output from the central processing unit.

### Industrial Applicability

The present invention enables data generated when executing a Java application to be protected from interception and modification, and, with download distribution businesses whose download contents involve Java applications expected to develop in earnest in the near future, the present invention is particularly effective in such businesses for protecting the rights of a contents creator.
One example of such a download distribution business is a service called "i-appli" provided by NTT DoCoMo for mobile telephones. With this service, a mobile telephone terminal executing a Java program that it has downloaded from an application distribution server on the Internet. Furthermore,in Europe a system called DVB-MHP(Digital Video Broadcasting- Multimedia Home Platform) has been established, and is already being put into practical use. In a digital broadcast based on the DVB-MHP standard, a digital TV executes a Java program that it has received multiplexed on a broadcast wave.

## Claims

1. An execution device for executing an application program created in an object-oriented language, the application program including one or more classes that each have one or more methods, and confidentiality information that expresses whether or not confidentiality is necessary,
the execution device comprising:
an encryption determination unit operable to determine whether or not encryption is necessary, with reference to the confidentiality information; and
an object recording unit operable to, when the method is to be executed, record, in a memory, an object including data that the method manipulates,
wherein, when the encryption determination unit determines that encryption is necessary, the object recording unit records the object with the data encrypted.

2. The execution device of Claim 1, wherein
the confidentiality information further includes information showing a level of confidentiality,
the execution device further comprises an encryption method determination unit operable to, with reference to the confidentiality information, determine an encryption method, and
when the encryption determination unit judges that encryption is necessary, the object recording unit records the object with the data encrypted according to the determined encryption method.

3. The execution device of Claim 1, wherein
when overwriting the data included in the object using other data, if the data included in the object is encrypted, the other data is recorded encrypted.

4. The execution device of Claim 3, wherein
the object recorded in the memory includes information showing whether or not the data in the object is encrypted, and
when the information shows that data in the object is encrypted, the data is recorded encrypted.

5. The execution device of Claim 1, further comprising a data judgment unit operable to judge whether or not the data is data necessary for specifying an address location of other data, wherein
when the data judgment unit judges that the data is data necessary for specifying an address location of other data, encryption is suppressed.

6. An execution device for executing a program,
the program including data and confidentiality information showing whether or not confidentiality is necessary,
the execution device comprising:
an encryption determination unit operable to judge whether or not encryption is necessary, with reference to the confidentiality information; and
a load unit operable to load the data to a main memory when an executable program is executed,
wherein, when the encryption determination unit judges that encryption is necessary, the load unit encrypts the data and loads the encrypted data.
